# EUROPÄISCHE PATENTSCHRIFT

(11) **EP 2 885 533 B1**
(45) Veröffentlichungstag und Bekanntmachung des Hinweises auf die Patenterteilung: **21.12.2016**
(21) Anmeldenummer: 12740338.4
(22) Anmeldetag: 19.07.2012
(51) Int. Cl.: F03D 7/02

(54) **STRÖMUNGSKRAFTANLAGE**
FLUID FLOW POWER PLANT
INSTALLATION GÉNÉRATRICE D'ÉNERGIE À FLUX

(43) Veröffentlichungstag der Anmeldung: 24.06.2015
(73) Patentinhaber: Enbreeze GmbH, 13053 Berlin (DE)
(72) Erfinder: DABROWSKI, Jan, 10369 Berlin (DE)
(86) Internationale Anmeldenummer: PCT/EP2012/064189
(87) Internationale Veröffentlichungsnummer: WO 2014/012591

(56) Entgegenhaltungen:
- DE-B3-102007 059 038
- DE-C- 904 400
- GB-A- 2 010 980

## Beschreibung

Die Erfindung betrifft eine Strömungskraftanlage, insbesondere Windkraftanlage, welche einen Rotor mit einer Rotornabe, die um eine Rotorachse drehbar gelagert ist, und mit zumindest einem Rotorblatt, das an der Rotornabe um eine Rotorblattachse verstellbare gelagert ist, eine Generatornabe, die um die Rotorachse drehbar gelagert und mit einem elektrischen Generator antriebsverbunden ist, wobei die Rotornabe und die Generatornabe relativ zueinander drehbar sind, sowie eine Koppelvorrichtung, die das Rotorblatt mit der Generatornabe derart koppelt, dass eine Drehbewegung des Rotorblatts um die Rotorblattachse eine Drehbewegung der Rotornabe relativ zur Generatornabe bewirkt, wobei die Koppelvorrichtung im Betrieb ein Verstellen des Rotorblatts durch ein Zusammenwirken eines auf das Rotorblatt einwirkenden Auftriebsmoments, das durch die auf das Rotorblatt einwirkende Strömung, insbesondere Wind, um die Rotorblattachse erzeugte wird, und eines Generatormoments, das von dem Generator auf die Generatornabe wirkt, bewirkt, umfasst. Bei der Strömungskraftanlage gemäß der Erfindung handelt es sich vorzugsweise um eine Windkraftanlage, sie kann jedoch auch als Wasserkraftanlage, z.B. als Gezeitenkraftwerk, ausgebildet sein.

Eine solche Strömungskraftanlage in Form einer Windkraftanlage ist in der DE 904 400 beschrieben, welche eine sogenannte passive Pitch-Regelung, also eine passive Regelung des Anstellwinkels der Rotorblätter zum Wind, aufweist. Offenbart ist ein Verfahren zur Pitch-Regelung, das durch das Kräfteverhältnis zwischen Auftriebskraft und Vortriebskraft definiert wird.

Die Auftriebskraft ist die aerodynamische Kraft, die durch die Anströmung des Rotorblatts und aufgrund des Profils des Rotorblatts, das dem Profil einer Tragfläche eines Flugzeugs ähnelt, auf das Rotorblatt einwirkt. Die Auftriebskraft steht senkrecht zur Anströmrichtung und greift exzentrisch zur Rotorblattachse an dem Rotorblatt an, so dass sich ein Auftriebsmoment um die Rotorblattachse ergibt.

Die Vortriebskraft ist die entstehende Kraft in Umfangsrichtung, welche letztendlich die Drehbewegung des Rotors bewirkt, und ist abhängig von der Richtung und der Größe der Auftriebskraft. Die Vortriebskraft greift exzentrisch zur Rotorachse an dem Rotorblatt an und bewirkt ein Vortriebsmoment um die Rotorachse, welches einem Generatormoment, welches von dem Generator auf das System einwirkt, entgegenwirkt.

Über eine Koppelvorrichtung wird das Auftriebsmoment dem Generatormoment entgegengesetzt. Hierzu ist die Rotornabe, welche die Rotorblätter drehbar trägt, drehbar zur Generatornabe montiert. Die Rotornabe wird nur über ein mechanische System der Koppelvorrichtung mit der Generatornabe verbunden. Die Auftriebskraft am Rotorblatt bewirkt das Auftriebsmoment um die Rotorblattachse, welches das Rotorblatt nach hinten aus dem Wind dreht ("pitch-to-feather"). Diesem Moment wirkt das Generatormoment über die Koppeleinrichtung entgegen. Das Generatormoment kann maximal so groß sein wie das Vortriebsmoment, jedoch kann es nach unten beliebig abweichen indem die elektrische Belastung des Generators reduziert wird. Damit ist es möglich, das Momentenverhältnis zwischen Vortriebsmoment bzw. Auftriebsmoment und Generatormoment einzustellen. Ist das Vortriebsmoment größer als das Generatormoment so führt das zu einem Regelverhalten, welches das Rotorblatt aus dem Wind dreht ("pitch-to-feather"). Ist das Generatormoment größer als das Vortriebsmoment führt es dazu, dass das Rotorblatt in den Wind geregelt wird. Somit ist prinzipiell ein rein mechanisches Regelungssystem verwirklicht. Jedoch hat sich in der Praxis herausgestellt, dass noch weitere Faktoren zu berücksichtigen sind, insbesondere auf das Rotorblatt einwirkende Fliehkräfte, welche ebenfalls Drehmomente auf das Rotorblatt verursachen und das Regelverhalten stark beeinflussen.

Neben der oben beschriebenen Pitch-Regelung sind bei kleineren Windkraftanlagen auch andere passive Regelungskonzepte bekannt. Meist werden die Fliehkräfte der Anlage genutzt, um die Rotorblätter bei hohen Drehzahlen aus dem Wind zu drehen. Ein solches System ist zum Beispiel aus der CH 230132 A bekannt. Solche Systeme haben jedoch den Nachteil, dass die Leistung und die Belastungen erst bei hohen Drehzahlen reduziert werden und das System eine gewisse Trägheit aufweist. Tritt plötzlich eine Windböe auf, so erfolgt aufgrund der Trägheit des Systems zunächst keine Regelung der Rotorblätter, so dass die Anlage höher und ggf. zu hoch belastet wird.

Bei großen Windkraftanlagen werden aktive Pitch-Regelungssysteme eingesetzt, um die Rotorblätter bei hohen Windgeschwindigkeiten aus dem Wind zu drehen. Dies ist notwendig wenn hohe Windgeschwindigkeiten auftreten um die Belastung der Anlage in Grenzen zu halten und die Anlage nicht auf die maximale Windlast auslegen zu müssen. Die Rotorblätter werden entsprechend der Windgeschwindigkeiten und der Belastungen um die Drehachse der einzelnen Rotorblätter aus dem Wind gedreht. Dies erfolgt in der Regel mittels elektrischen oder hydraulischen Antrieben. Die gewünschte Stellung der Rotorblätter wird über ein Computersystem gesteuert. Des Weiteren ist es mit diesem System möglich, die Rotorblätter im Nennleistungsbereich in einem feinen Bereich nachzuregeln, um den Wirkungsgrad zu steigern und die Belastungen zu minimieren. Zudem ist eine Anlaufregelung möglich, welche die Anlage nach einem Stillstand so regelt, dass im Anlauf ein maximales Drehmoment anliegt bis die Anlage eine kritische Drehzahl überschritten hat.

Aufgabe der vorliegenden Erfindung ist es, eine Strömungskraftanlage bereit zu stellen, die auf möglichst effektive und kostengünstige Art den Einstellwinkel zumindest eines Rotorblatts regelt. Dies soll ohne elektrische Komponenten mit einem rein mechanischen System geschehen. Zudem soll das Regelungssystem unmittelbar auf Luftkräfte am Rotorblatt reagieren, um Belastungen an den Rotorblättern zu minimieren.

Die Aufgabe wird mit einer eingangs genannten Strömungskraftanlage gelöst, wobei das Rotorblatt mindestens ein exzentrisch zur Rotorblattachse angeordnetes Ausgleichsgewicht aufweist, welches ein durch Fliehkräfte erzeugtes Ausgleichsdrehmoment um die Rotorblattachse auf das Rotorblatt erzeugt, wobei das Ausgleichsdrehmoment einem Drehmoment um die Rotorblattachse entgegenwirkt, welches durch Fliehkräfte, die aufgrund der Rotation des Rotorblatts um die Rotorachse auf das Rotorblatt einwirken, erzeugt wird.

Das mindestens eine Rotorblatt ist derart relativ zur Rotorblattachse ausgebildet, dass ein resultierender Druckpunkt der aerodynamischen Kräfte, die auf das Rotorblatt wirken, exzentrisch zur Rotorblattachse angeordnet ist. Nur durch eine solche Anordnung ist überhaupt aufgrund der aerodynamischen Kräfte ein Drehmoment um die Rotorblattachse erzeugbar. Dies hat jedoch zur Folge, dass auch ein Schwerpunkt des Rotorblatts ebenfalls exzentrisch zur Rotorblattachse angeordnet ist. Zwar sind der resultierende Druckpunkt und der Schwerpunkt des Rotorblatts nicht identisch, jedoch ergibt sich bezogen auf die Rotorblattachse ein ähnlicher Abstand zu dieser. Aufgrund der exzentrischen Anordnung des Schwerpunkts des Rotorblatts entstehen Fliehkräfte am Rotorblatt sowie an der Aufhängung des Rotorblatts. Diese Fliehkräfte verursachen ein Drehmoment um die Rotorblattachse bei Rotation der Rotornabe und somit der Rotorblätter um die Rotorachse. Dies beeinflusst direkt das Regelverhalten, da neben dem Auftriebsmoment ein weiteres Drehmoment auf das Rotorblatt einwirkt. Erfindungsgemäß werden daher ein oder mehrere Ausgleichsgewichte an dem zumindest einen Rotorblatt derart vorgesehen, dass die Summe der Drehmomente um die Rotorblattachse aufgrund der Fliehkräfte, die auf das Rotorblatt einwirken, und aufgrund der Fliehkräfte, die auf das mindestens eine Ausgleichsgewicht einwirken, sich im Idealfall gegenseitig aufheben bzw. ein möglichst gering resultierendes Drehmoment ergeben. Hierdurch können auch Drehmomente ausgeglichen werden, die aufgrund einer Schiefstellung der gesamten Strömungskraftanlage eine Schiefstellung der Rotorachse aus der Waagerechten zur Folge hat. Im Optimum werden alle durch mechanische Einflüsse entstehenden Drehmomente um die Rotorblattachse ausgeglichen, so dass nur noch aerodynamische Kräfte am Rotorblatt wirksam sind.

Vorzugsweise ist das mindestens eine Ausgleichsgewicht in einem rotorachsnahen Bereich des Rotorblatts angeordnet, d.h. das Ausgleichsgewicht ist möglichst nahe an der Lagerung des Rotorblatts angeordnet, die sich nahe an der Rotorachse befindet.

Günstig ist eine Anordnung mit zwei Ausgleichsgewichten, wobei vorzugsweise das Rotorblatt und die beiden Ausgleichsgewichte in etwa gleichmäßig um die Rotorblattachse verteilt angeordnet sind. Zwischen den Ausgleichsgewichten bzw. zwischen dem Rotorblatt und den Ausgleichsgewichten wird somit ein Winkel von etwa 120° aufgespannt.

Um einen möglichst effizienten Ausgleich der Momente aufgrund der Fliehkräfte zu gewährleisten, ist die Gewichtsverteilung in radialer Richtung relativ zur Rotorblattachse des mindestens einen Ausgleichsgewichts in etwa identisch zur Gewichtsverteilung in radialer Richtung relativ zur Rotorblattachse des Rotorblatts. Hierdurch sind die Schwerpunkte des Rotorblatts und des zumindest eines Ausgleichsgewichts in etwa gleich weit von der Rotorblattachse entfernt.

Die Koppelvorrichtung bewirkt im Betrieb ein Verstellen des Rotorblatts derart, dass sich unabhängig von der Strömungsgeschwindigkeit, insbesondere Windgeschwindigkeit, ein Drehmomentengleichgewicht zwischen dem Vortriebsmoment, das vom Auftriebsmoment an dem Rotorblatt abhängig ist, und dem Generatormoment einstellt. Jedes Rotorblatt, vorzugsweise drei Rotorblätter, der Strömungskraftanlage sind exzentrisch so angeordnet, dass die Luftkräfte am Rotorblatt das Auftriebsmoment um die Rotorblattachse ausüben. Das Auftriebsmoment wird über das mechanische System der Koppelvorrichtung mit dem Generator wirkverbunden. Die Rotornabe, welche die Rotorblätter drehbar aufnimmt, ist drehbar gegenüber einer Generatornabe, welche mit dem Generator antriebsverbunden ist, gelagert, so dass von der Rotornabe kein Drehmoment unmittelbar auf die Generatornabe übertragen wird. Eine Drehmomentübertragung findet ausschließlich über die Koppelvorrichtung statt. Somit liegt ein Übersetzungsverhältnis zwischen dem Vortriebsmoment, das von den Rotorblättern auf die Rotornabe einwirkt, und den Auftriebsmomenten der einzelnen Rotorblätter um die Rotorblattachsen vor. Das Übersetzungsverhältnis ist abhängig von dem Anstellwinkel des zumindest einen Rotorblatts, so dass die Koppelvorrichtung zur Erzielung eines Drehmomentengleichgewichts entsprechend an das variable Übersetzungsverhältnis angepasst sein muss. Vorzugsweise ist die Koppelvorrichtung hierzu als Kurvengetriebe ausgestaltet. Die Koppelvorrichtung kann ein mit der Generatornabe verbundenes erstes Koppelelement und ein mit dem zumindest einen Rotorblatt verbundenes zweites Koppelelement umfassen. Bei mehreren Rotorblättern ist je Rotorblatt ein erstes Koppelelement und ein zweites Koppelelement vorgesehen. Eines der beiden Koppelelemente kann eine kugelförmige Kulisse und das andere der beiden Koppelelemente einen entlang der Kulisse geführten Mitnehmer umfassen.

Beim Verdrehen des zumindest einen Rotorblatts verschiebt sich somit der Mitnehmer entlang der Kulisse und bewirkt in Umfangsrichtung um die Rotorachse eine Mitnahme der Generatornabe durch eine Drehung der Rotornabe. Da die Rotornabe relativ zur Generatornabe ebenfalls verdreht wird, wenn sich das zumindest eine Rotorblatt verdreht, ändert sich auch bezogen auf eine Ebene senkrecht zur Rotorachse die Winkellage des Mitnehmers relativ zur Kulisse, wenn die Kulisse in einer Ebene angeordnet ist. Daher kann vorgesehen sein, dass dasjenige Koppelelement der beiden Koppelelemente, welches die Kulisse umfasst, derart quer zur Erstreckung der Kulisse gekrümmt sein muss, dass die Kulisse an der Stelle, an der sich der Mitnehmer entlang der Kulisse befindet, denselben Abstand zur Rotorachse aufweist wie der Mitnehmer.

Vorzugsweise kann die Kulisse in Form einer Nut ausgebildet sein, in der der Mitnehmer in Form eines Stiftes geführt ist.

Die Rotorblattachse des zumindest einen Rotorblatts kann die Rotorachse mit Abstand kreuzend angeordnet sein.

Dies ist insbesondere dann vorteilhaft, wenn das Rotorblatt derart angeordnet ist, dass innerhalb des Verstellbereichs des Rotorblatts in einer bestimmten Winkelstellung der Schwerpunkt des Rotorblatts auf einer Längsebene angeordnet ist, die die Rotorachse beinhaltet und die parallel zur jeweiligen Rotorblattachse angeordnet ist. Somit ergibt sich eine Winkelstellung des Rotorblatts, in der kein Drehmoment aufgrund der auf den Schwerpunkt des Rotorblatts einwirkenden Fliehkräfte entsteht.

Ein weiterer Punkt, bei dem keine Drehmomente aufgrund der Fliehkräfte auf den Schwerpunkt des Rotorblatts entstehen ergibt sich dann, wenn das Rotorblatt derart angeordnet ist, dass innerhalb des Verstellbereichs des Rotorblatts in einer bestimmten Winkelstellung der Schwerpunkt des Rotorblatts auf einer Radialebene zur Rotorachse angeordnet ist, die die Rotorachse beinhaltet oder diese schneidet. Vorzugsweise kann das Rotorblatt derart angeordnet sein, dass bei zwei Winkelstellungen innerhalb des Verstellbereichs keine Drehmomente aufgrund von Fliehkräften, die auf den Schwerpunkt des Rotorblatts einwirken, entstehen. Hierzu kann vorgesehen sein, dass das Rotorblatt derart angeordnet ist, dass beim Verstellen des Rotorblatts von einer Ausgangsstellung, in der das Rotorblatt maximal aus der Strömung, insbesondere aus dem Wind, gedreht ist, in eine Endstellung, in der das Rotorblatt maximal in die Strömung, insbesondere in den Wind, gedreht ist, der Schwerpunkt des Rotorblatts zunächst die Längsebene und anschließend die Radialebene durchläuft.

Um in einer Hauptbetriebsstellung, bei der die Strömungskraftanlage eine Nennleistung abgibt, zu gewährleisten, dass möglichst kein Drehmoment aufgrund von Fliehkräften auf das Rotorblatt einwirkt und um ein möglichst günstiges Regelverhalten zu gewährleisten, kann vorgesehen sein, dass das Rotorblatt derart angeordnet ist, dass der Schwerpunkt des Rotorblatts in einer Hauptbetriebsstellung des Rotorblatts auf einer der Ebenen, nämlich Längsebene oder Radialebene, liegt.

Um ein möglichst gutes Regelverhalten beim Anfahren der Strömungskraftanlage bzw. beim Regeln bis zur Nennlast zu gewährleisten, ist wünschenswert, dass das Rotorblatt möglichst zügig in die Strömung, insbesondere in den Wind, regelt. Hierzu kann vorgesehen sein, dass die Rotorblattachse relativ zur Rotorachse und das Rotorblatt relativ zur Rotorblattachse derart angeordnet sein, dass bei einer Erhöhung der Drehzahl des Rotors eine Fliehkraft auf das Rotorblatt derart einwirkt, dass sich ein Drehmoment um die Rotorblattachse ergibt, welches das Rotorblatt in die Strömung, insbesondere in den Wind, dreht.

Ein bevorzugtes Ausführungsbeispiel wird anhand der Zeichnungen im folgenden näher erläutert. Hierin zeigen
- Figur 1: eine schematische Darstellung eines Profils eines Rotors in einer Ansicht in Richtung der Rotorblattachse,
- Figuren 2a bis 2d: schematische Darstellungen eines Rotorblatts 1 in Richtung der Rotorblattachse B in unterschiedlichen Blatteinstellwinkeln und
- Figur 2e: eine schematische Darstellung des Drehmoments, welches durch Fliehkräfte auf das Rotorblatt um die Rotorblattachse entstehen.
- Figur 3: eine perspektivische Ansicht einer Windkraftanlage,
- Figur 4: eine vergrößerte perspektivische Ansicht im Bereich der Generatornabe und der Rotornabe der Windkraftanlage gemäß Figur 2,
- Figur 5: einen Längsschnitt durch die Windkraftanlage gemäß Figur 2 in vergrößerter Darstellung im Bereich der Rotornabe und der Generatornabe,
- Figur 6: einen Querschnitt durch die Windkraftanlage gemäß Figur 4 entlang der Schnittlinie VI - VI und
- Figur 7: eine vergrößerte perspektivische Ansicht im Bereich der Generatornabe und der Rotornabe einer alternativen Ausbildungsform einer Windkraftanlage.

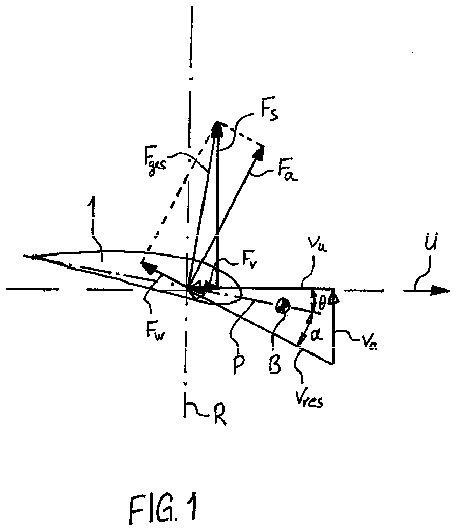

Bevor im folgenden auf die Details einer Ausführungsform einer erfindungsgemäßen Strömungskraftanlage in Form einer Windkraftanlage eingegangen wird, soll im folgenden anhand der Figur 1 erläutert werden, welche Kräfte grundsätzlich auf einen Rotor einer Windkraftanlage einwirken.

Figur 1 zeigt hierzu rein schematisch das Profil eines Rotorblatts 1 in Richtung der Rotorblattachse B, um die das Rotorblatt 1 der Windkraftanlage verstellt werden kann. Da es sich vorliegend um eine Windkraftanlage nach dem Auftriebsläuferprinzip handelt, weist das Profil eine übliche Form analog den Verhältnissen an einer Flugzeugtragfläche auf. Das Rotorblatt 1 dreht sich in Richtung der Drehrichtung U um die Rotorachse R. Das Rotorblatt 1 wird in Richtung der Rotorachse R vom Wind mit einer Windgeschwindigkeit Vₐ angeströmt. Zusammen mit der Umfangsgeschwindigkeit Vᵤ, mit welcher das Rotorblatt 1 aufgrund der Drehbewegung um die Rotorachse R angeströmt wird, ergibt sich eine resultierende Anströmgeschwindigkeit Vᵣₑₛ. Das Profil des Rotorblatts 1 weist eine Profilsehne P auf, welche sich durch die am weitesten voneinander entfernten Profilpunkte erstreckt. In Bezug auf die Drehrichtung U ist das Rotorblatt 1 um einen Winkel θ angestellt, wobei der Winkel θ durch die Drehrichtung U bzw. die Umfangsgeschwindigkeit Vᵤ und der Profilsehne P aufgespannt wird. Ferner ergibt sich ein aerodynamischer Anstellwinkel α, der durch die Profilsehne P und die resultierende Anströmgeschwindigkeit Vᵣₑₛ aufgespannt wird. Aufgrund des aerodynamischen Profils des Rotorblatts 1 und der Anstellung desselben wird eine Auftriebskraft Fₐ erzeugt, welche im rechten Winkel zur resultierenden Anströmgeschwindigkeit Vᵣₑₛ steht. Ferner ergibt sich eine Widerstandskraft F_{w}, welche in derselben Richtung verläuft wie die resultierende Anströmgeschwindigkeit Vᵣₑₛ. Die Auftriebskraft Fₐ und die Widerstandskraft F_{w} sind Kraftkomponenten einer sich ergebenden Gesamtluftkraft F_{ges}, die auf das Rotorblatt 1 einwirkt. Die Gesamtluftkraft F_{ges} lässt sich zudem in zwei andere Kraftkomponenten einteilen, nämlich in eine Vortriebskraft Fᵥ, in Drehrichtung U und eine Schubkraft Fₛ in Richtung der Windgeschwindigkeit Vₐ bzw. der Rotorachse R. Die Vortriebskraft Fᵥ bewirkt die Drehung des Rotorblatts 1 um die Rotorachse R.

Das Rotorblatt 1 ist exzentrisch zur Gesamtluftkraft F_{ges} drehbar um eine Rotorblattachse B gelagert. Dadurch entsteht ein Drehmoment um die Rotorblattachse B aufgrund der Gesamtluftkraft F_{ges}.

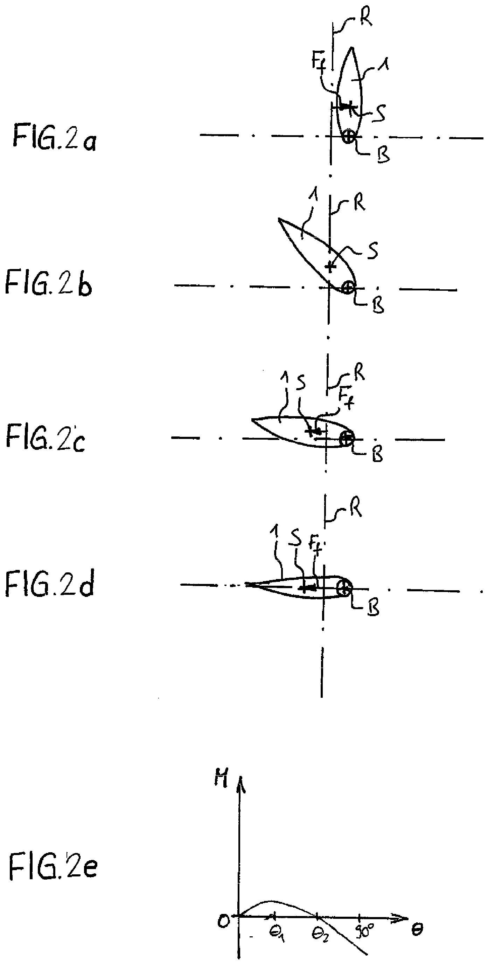

Die Figur 2 zeigt schematisch eine Ansicht auf eines der Rotorblätter 1 in Richtung der Rotorblattachse B in unterschiedlichen Stellungen des Rotorblatts 1, also mit unterschiedlichen Blatteinstellwinkeln θ. Insgesamt sind vier unterschiedliche Winkelstellungen dargestellt, in Figur 2a ein Blatteinstellwinkel von θ = 90°, in Figur 2b mit θ = θ₁, wobei der Schwerpunkt des Rotorblatts radial zur Rotorachse R angeordnet ist, wobei die kürzeste Verbindungslinie von der Rotorachse R zum Schwerpunkt parallel zur Rotorblattachse B verläuft. Figur 2c zeigt eine Zwischenstellung mit θ = θ₂ und Figur 2d zeigt das Rotorblatt 1 bei einem Blatteinstellwinkel θ = 0°.

Bei der gezeigten Anordnung der Rotorblätter 1 ergibt sich nicht nur aufgrund der aerodynamischen Verhältnisse am Rotorblatt 1 ein Drehmoment auf das Rotorblatt 1, welches um die Rotorblattachse B wirkt. Vielmehr ergeben sich zudem aufgrund der Fliehkräfte Drehmomente um die Rotorblattachse B. Im Fall, dass der Blatteinstellwinkel θ = 90° beträgt (Figur 2a), ergibt sich eine resultierende Fliehkraft, welche radial zur Rotorachse R durch den Schwerpunkt S des Rotorblatts 1 verläuft. Diese Fliehkraft ist nicht parallel zur Rotorblattachse B ausgerichtet, so dass sich eine Kraftkomponente Fₜ ergibt, welche tangential verläuft, so dass sich ein Drehmoment um die Rotorblattachse B ergibt.

Dies gilt auch für einen Blatteinstellwinkel θ = θ₂ gemäß Figur 2c. Dort ergibt sich jedoch eine Tangentialkraft Fₜ, welche ein Drehmoment um die Rotorblattachse B bewirkt, welches zu dem Drehmoment, welches sich in der Stellung gemäß Figur 2a ergibt, entgegengesetzt ist.

In der Stellung des Rotorblatts 1 gemäß Figur 2b verläuft die Fliehkraft F_{f} parallel zur Rotorblattachse B, d.h. senkrecht zur Zeichenblattebene, so dass kein Drehmoment um die Rotorblattachse B entsteht.

Ebenso entsteht kein Drehmoment um die Rotorblattachse B in der Stellung des Rotorblatts 1 gemäß Figur 2d. Hier verläuft die Fliehkraft F_{f} zwar nicht parallel zur Rotorblattachse B, jedoch ergibt sich eine Tangentialkraftkomponente derart, die keinen Hebel um die Rotorblattachse B aufweist und somit kein Drehmoment um die Rotorblattachse B erzeugen kann.

Der Drehmomentverlauf bei konstanter Drehgeschwindigkeit um die Rotorblattachse B in Abhängigkeit vom Blatteinstellwinkel θ ist in Figur 2e dargestellt. Vorzugsweise ist das Rotorblatt 1 derart an der Rotornabe 5 drehbar angeordnet, dass sich im Bereich der Nennleistung das Rotorblatt 1 möglichst nahe an einer der Positionen befindet, bei denen kein Drehmoment entsteht.

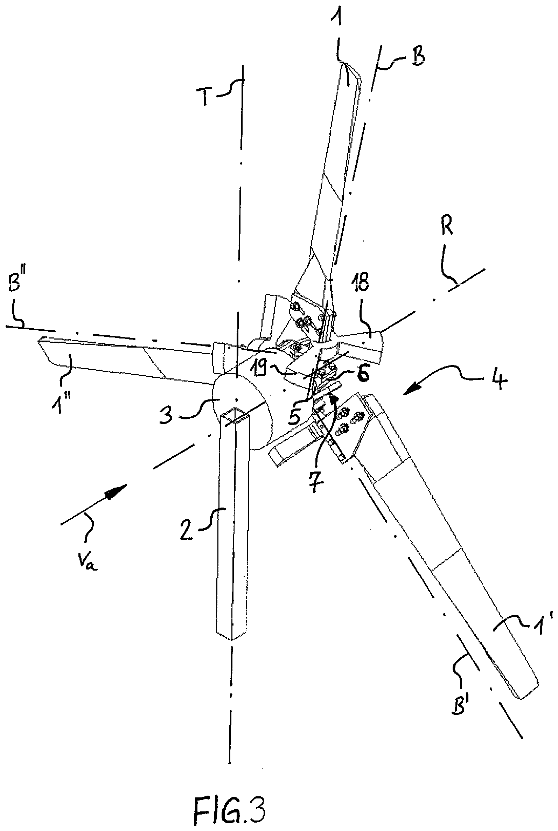

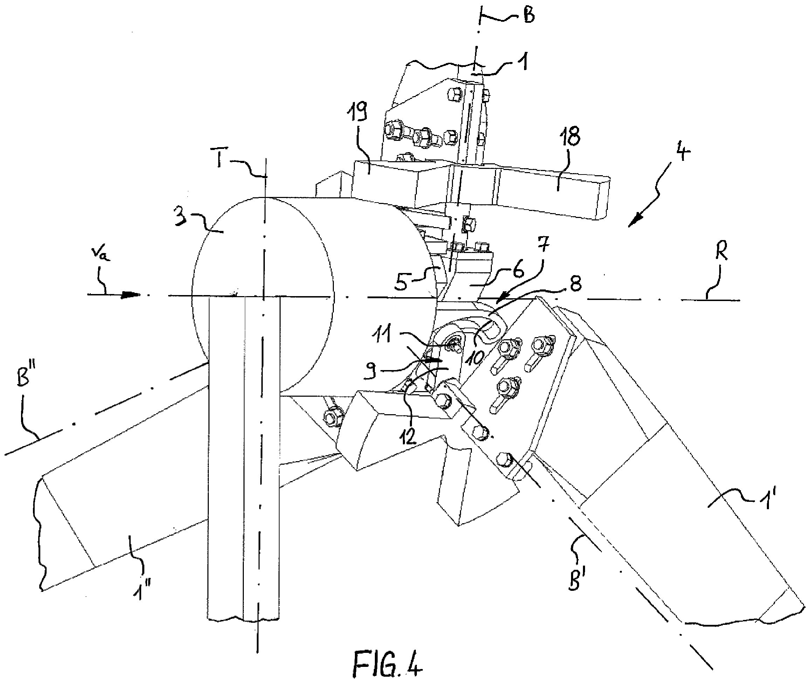

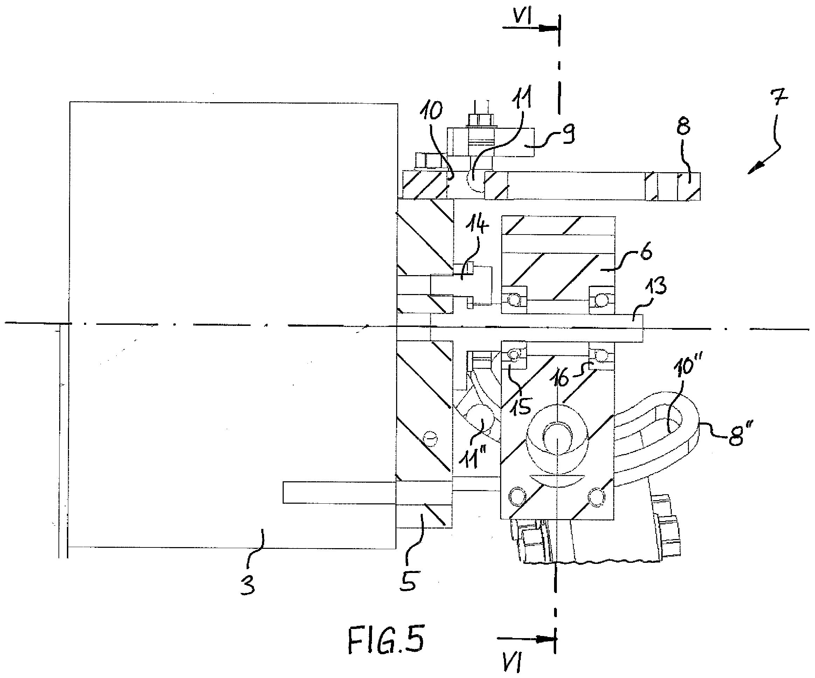

Die Figuren 3 und 4 zeigen ein Ausführungsbeispiel einer erfindungsgemäßen Windkraftanlage in perspektivischer Darstellung, wobei Figur 4 eine vergrößerte Darstellung im Bereich des Generators ist. Figur 5 ist ein Längsschnitt im Bereich des Generators entlang der Rotorachse R. Die Figuren werden im folgenden zusammen erläutert.

In Figur 3 ist die gesamte Windkraftanlage ersichtlich, welche einen Turm 2 umfasst, der schematisch in Form eines Vierkantprofils dargestellt ist und der vertikal entlang einer Turmachse T ausgerichtet ist. An dem Turm 2 ist ein Generator 3 um die Turmachse T schwenkbar angeordnet. Hierbei kann der Generator 3 relativ zum Turm 2 drehbar sein oder zusammen mit dem Turm 2 bzw. einem Bauteil desselben schwenken. Der Generator 3 ist über einen Rotor 4 angetrieben, wobei der Rotor 4 um eine Rotorachse R drehbar ist und einen Läufer des Generators 3 antreibt. Die Rotorachse R ist im vorliegenden Fall horizontal und senkrecht zur Turmachse T ausgerichtet. Ferner befindet sich der Rotor 4 bezogen auf die Windrichtung Vₐ hinter der Turmachse T. Es handelt sich somit vorliegend um einen sogenannten Lee-Läufer. Grundsätzlich kann die Windkraftanlage auch als Luv-Läufer ausgebildet sein, bei der der Rotor 4 in Windrichtung Vₐ betrachtet vor der Turmachse T angeordnet ist, wobei dann eine Vorrichtung zur Ausrichtung des Rotors 4 vorgesehen sein muss, z.B. in Form einer Fahne, welche sich hinter der Turmachse T befindet.

Der Rotor 4 umfasst drei Rotorblätter 1, 1', 1 ", welche gleichmäßig um die Rotorachse R angeordnet sind und im wesentlichen radial zu dieser verlaufen. Die Rotorblätter 1 sind jeweils um eine Rotorblattachse B verdrehbar, wobei im folgenden immer das erste der Rotorblätter 1 exemplarisch beschrieben wird. Alle übrigen Rotorblätter 1 sind analog hierzu aufgebaut und angeordnet. Durch ein Verdrehen der Rotorblätter 1 relativ zur Rotorblattachse B ist der Anstellwinkel des Rotorblatts 1 zum Wind veränderbar. Im vorliegenden Fall sind drei Rotorblätter 1, 1', 1" gezeigt. Grundsätzlich kann jedoch eine beliebige Anzahl von Rotorblättern vorgesehen sein.

Zur Drehbarkeit der Rotorblätter 1 sind diese über Lageranordnungen, wie dies noch später erläutert wird, drehbar an der Rotornabe 6 gelagert. Die Rotornabe 6 ist nicht fest mit der Generatornabe 5 verbunden, sondern über eine Koppelvorrichtung 7 mit dieser antriebsverbunden, so dass ein Verdrehen der Rotornabe 6 relativ zur Generatornabe 5 ermöglicht ist. Die Koppelvorrichtung 7 bewirkt, dass eine Drehbewegung des Rotorblatts 1 um die Rotorblattachse B eine Drehbewegung der Rotornabe 6 relativ zur Generatornabe 5 bewirkt. Somit bewirkt die Auftriebskraft Fₐ des Rotorblatts 1 sowie das Drehmoment des Abtriebs, d.h. des Generators 3, eine Verstellung des Blatteinstellwinkels θ. Die Auftriebskraft Fₐ des Rotorblatts 1 wirkt über die Koppelvorrichtung 7 mechanisch dem Drehmoment der Generatornabe 5 entgegen. Hierzu umfasst die Koppelvorrichtung 7 erste Koppelelemente 8, welche mit der Generatornabe 5 fest und drehfixiert verbunden sind. Je erstem Koppelelement 8 ist ein zweites Koppelelement 9 vorgesehen, welches mit der Rotornabe 6 fest und drehsicher verbunden ist. Jeweils ein erstes Koppelelement 8 ist antriebsmäßig mit einem zweiten Koppelelement 9 verbunden, wobei im folgenden auf eine dieser Paarungen Bezug genommen wird. Grundsätzlich ist es auch möglich, dass nur ein erstes Koppelelement 8 und ein zweites Koppelelement 9 vorgesehen ist. Zur besseren Verteilung der Kräfte werden jedoch mehrere Paarungen von Koppelelementen 8, 9 bevorzugt sein. Die Koppelelemente 8, 9 sind derart ausgebildet, dass ein zumindest begrenztes Verdrehen der Rotornabe 6 und der Generatornabe 5 zueinander möglich ist. Dieses Verdrehen bewirkt jedoch auch ein Verstellen des Rotorblatts 1. Hierzu weist jedes erste Koppelelement 8 eine Kulisse in Form einer Nut 10 auf, die kurvenförmig gestaltet ist. Die zweiten Koppelelemente 9 weisen jeweils einen Mitnehmer 11 auf, die stiftförmig gestaltet sind und in die jeweilige Nut 10 eingreifen. Die Nuten 10 verlaufen kurvenförmig entlang der Rotorachse R, so dass Umfangskräfte von den Mitnehmern 11 über die Nuten 10 auf die Generatornabe 5 übertragen werden können. Da die Nuten 10 jedoch kurvenförmig gestaltet sind, ergeben sich nicht nur Kraftkomponenten in Umfangsrichtung, sondern auch Kraftkomponenten in Axialrichtung, d.h. parallel zur Rotorachse R. Die Mitnehmer 11 sind exzentrisch zur jeweiligen Rotorblattachse B angeordnet, so dass sich ein wirksamer Hebelarm zwischen dem Mitnehmer 11 und der Rotorblattachse B ergibt. Sobald Kräfte in Umfangsrichtung von den Mitnehmern 11 auf die Generatornabe 5 wirken, werden, wie bereits erwähnt, auch Axialkräfte parallel zur Rotorachse R erzeugt, die aufgrund des kurvenförmigen Verlaufs der Nut 10 ein Verstellen des Mitnehmers 11 innerhalb der Nut 10 bewirken können, so dass das jeweilige Rotorblatt 1 um die Rotorblattachse B verdreht wird.

Wie erläutert, ist jedes Rotorblatt 1 um seine Rotorblattachse B drehbar an der Rotornabe 6 gelagert. Die Rotorblattachse B ist derart angeordnet, dass die Auftriebskraft Fₐ des Rotorblatts 1 ein Drehmoment auf die Rotorblattachse B erzeugt. Dieses Drehmoment wirkt entgegen dem Generatormoment 3, welches von der Generatornabe 5 auf die Rotornabe 6 wirkt. Das Drehmoment des gesamten Antriebs entspricht dem Drehmoment, welches durch die Vortriebskraft Fᵥ der Rotorblätter 1 an der Rotornabe 6 entstehen. Das Drehmoment an der Rotornabe (Rotormoment) und die Auftriebskraft Fₐ verhalten sich idealerweise während des Betriebs der Windkraftanlage proportional zueinander. Daher wird die Auftriebskraft Fₐ über den einen Hebel 12, über welchen der Mitnehmer 11 mit dem jeweiligen Rotorblatt 1 verbunden ist, in ein Verhältnis zur Vortriebskraft Fᵥ gesetzt. Über die Länge des Hebels 12 lässt sich das Verhältnis zwischen Auftriebskraft Fₐ und Vortriebskraft Fᵥ einstellen. Des weiteren lässt sich das Drehmoment, welches die Auftriebskraft Fₐ um die Rotorblattachse B ausübt über die Entfernung einstellen, in der die Auftriebskraft Fₐ zur Rotorblattachse B wirkt.

Der Verdrehwinkel zwischen der Generatornabe 5 und der Rotornabe 6 ist im wesentlichen proportional zum Blatteinstellwinkel θ. Im normalen Betrieb liegt der Verdrehwinkel zwischen Rotornabe 6 und Generatornabe 5 bei Null. Dies entspricht einem Gleichgewicht zwischen dem Generatormoment und dem Rotormoment. Verändert sich das Verhältnis der Drehmomente zueinander, so verdrehen sich Generatornabe 5 und Rotornabe 6 zueinander, was ein Verstellen des Blatteinstellwinkels θ zur Folge hat. Vergrößert sich beispielsweise die Auftriebskraft Fₐ, hat dies eine Vergrößerung des Blatteinstellwinkels θ zur Folge. Gleichzeitig wird der aerodynamische Anstellwinkel α verkleinert. Ein Verkleinern des aerodynamischen Anstellwinkels α bewirkt eine Verringerung der Auftriebskraft Fₐ, so dass sich wiederum ein Drehmomentgleichgewicht zwischen dem Generatormoment und dem Rotormoment einstellt.

Verringert sich hingegen die Auftriebskraft Fₐ so wird der Blatteinstellwinkel θ kleiner und der aerodynamische Anstellwinkel α größer, so dass wiederum ein Drehmomentgleichgewicht hergestellt wird.

Eine Vergrößerung des Blatteinstellwinkels θ erfolgt bei Vergrößerung der Auftriebskraft Fₐ. Eine Vergrößerung der Auftriebskraft Fₐ entsteht meist dann, wenn eine schnelle Zunahme der Windgeschwindigkeit Vₐ, z. B. durch Böen, erfolgt. Eine Zunahme der Windgeschwindigkeit Vₐ verändert den aerodynamischen Anstellwinkel α, da die Drehzahl des Rotors 4 nicht unmittelbar zunimmt. Durch die Vergrößerung des aerodynamischen Anstellwinkels α nimmt bei herkömmlichen Windkraftanlagen der Auftriebsbeiwert bis zu einem Grenzwinkel zu. Wird dieser Winkel noch größer, reißt die Strömung ab. Aus diesem Grund werden herkömmliche Windkraftanlagen so ausgelegt, dass der aerodynamische Anstellwinkel α so klein ist, dass selbst bei plötzlicher Zunahme der Windgeschwindigkeit Vₐ und somit einer Vergrößerung des aerodynamischen Anstellwinkels α kein Strömungsabriss erfolgt. Diese Auslegung ist nicht optimal und lässt nicht die höchsten Wirkungsgrade erwarten. Bei größeren Windkraftanlagen besteht dieses Problem ebenfalls, da die Pitch-Regelung, d.h. die Regelung zur Veränderung des Blatteinstellwinkels θ, nicht schnell genug auf zunehmende Windgeschwindigkeiten reagieren kann.

Die erfindungsgemäße Lösung hat den Vorteil, dass zunehmende Windgeschwindigkeiten Vₐ unmittelbar die Auftriebskraft Fₐ beeinflussen und somit unmittelbar den Blatteinstellwinkel θ beeinflussen. Somit kann der Rotor 4 derart ausgelegt werden, dass stets eine optimale Anströmung der Rotorblätter 1 für einen möglichst hohen Wirkungsgrad gegeben ist.

Um die durch mechanische Einflüsse entstehenden Drehmomente aufgrund der Fliehkräfte, welche auf die Rotorblätter 1 einwirken, möglichst umfassend auszugleichen, so dass nur noch aerodynamische Kräfte am Rotorblatt wirksam sind, sind Ausgleichsgewichte 18, 19 je Rotorblatt vorgesehen, wie in den Figuren 3 und 4 ersichtlich ist. Die Ausgleichsgewichte sind nahe der Rotornabe 6 direkt am Rotorblatt befestigt und erzeugen Fliehkräfte, die den Fliehkräften, die auf das Rotorblatt einwirken, entgegengesetzt sind, bzw. die Drehmomente bewirken, die den Drehmomenten aufgrund der auf das Rotorblatt einwirkenden Fliehkräfte entgegenwirkt und diese ausgleicht.

Die erfindungsgemäße Lösung bietet einige Vorteile. Der Blatteinstellwinkel θ ergibt sich aus der Belastung des Abtriebs (Generators 3) relativ zur Auftriebskraft Fₐ. Da der Abtrieb als elektrischer Generator 3 ausgeführt ist, lässt sich die Belastung über eine Leistungselektronik steuern. Der Generator 3 erzeugt demnach in Abhängigkeit des elektrischen Belastungswiderstandes am elektrischen Ausgang eine bestimmte elektrische Leistung und erzeugt demnach proportional hierzu ein Drehmoment an der Generatornabe 5. Verringert sich das Drehmoment am Generator 3 (Generatormoment), so verringert sich auch die Kraft bzw. das Drehmoment, welches über die Koppelvorrichtung 7 übertragen wird. Da die Auftriebskraft Fₐ konstant bleibt, vergrößert sich der Blatteinstellwinkel θ solange, bis die Auftriebskraft Fₐ und die Abtriebskraft wieder im Gleichgewicht sind, bzw. bis sich ein Gleichgewicht zwischen dem Rotormoment und dem Generatormoment eingestellt hat. Je geringer die Leistungsentnahme am Generator 3 ist, desto größer wird der Blatteinstellwinkel θ. Der Blatteinstellwinkel θ lässt sich somit über die Belastung am Generator 3 regeln. Diese elektronische Regelung ist bei den meisten Windkraftanlagen schon vorhanden, da diese benötigt wird, um eine Netzeinspeisung oder Batterieladung zu gewährleisten. Es lässt sich somit mit der erfindungsgemäßen Lösung ohne weitere Elektronik eine exakte Regelung des Blatteinstellwinkels θ realisieren.

Auch beim Anlaufen der Windkraftanlage lässt sich dies ausnutzen. Beim Anlaufen kann die elektrische Belastung des Generators 3 gesenkt werden. Dadurch vergrößert sich der Blatteinstellwinkel θ. Die Anlage erzeugt in diesem Betriebspunkt ihr höchstes Drehmoment und kann somit optimal anlaufen.

Bei Erreichen der Nennleistung wird das Generatormoment konstant gehalten. Bei weiter zunehmender Windgeschwindigkeit Vₐ steigt die Auftriebskraft Fₐ weiter an, so dass der Blatteinstellwinkel θ weiter vergrößert wird. Der Wirkungsgrad der Windkraftanlage sinkt in diesem Fall und hält dadurch die Leistung konstant. Die Belastung der Windkraftanlage wird dadurch auch bei extrem hohen Windgeschwindigkeiten auf einem konstant niedrigen Niveau gehalten.

Ist bei zu hohen Windgeschwindigkeiten die Windkraftanlage abzuschalten, so kann durch Abschalten der elektrischen Last am Generator 3 die Windkraftanlage gestoppt werden. Die Rotorblätter 1 drehen aus dem Wind, bzw. der Blatteinstellwinkel θ wird so groß, dass kein Auftrieb mehr entsteht.

Ein weiterer Vorteil besteht darin, dass die Generatorleistungskennlinie des Generators 3 und die Kennlinie des Rotors 4 aufeinander abgestimmt werden können. Durch Anpassen der elektrischen Last lässt sich die Windkraftanlage immer im optimalen Wirkungsgradbereich betreiben. Dies ist insbesondere dann wichtig, wenn die Leistungskennlinie des Generators 3 und die des Rotors 4 nicht proportional zueinander verlaufen. Die Leistung des Generators 3 steigt quadratisch mit der Drehzahl des Rotors 4 an. Die Leistung am Rotor 4 steigt mit der dritten Potenz über die Windgeschwindigkeit Vₐ an. Für optimale Wirkungsgrade ist hier eine Anpassung der Leistungskurven erforderlich. Diese Anpassung kann einfach durch eine Leistungselektronik vorgenommen werden. Da Windkraftanlagen, die in das öffentliche Stromnetz einspeisen sollen, eine solche Anpassung sowieso vornehmen müssen, sind hiermit keine weiteren Kosten verbunden.

Zur Verhinderung von Schwingungen im System können z.B. ein oder mehrere Federn oder Dämpfer zwischen der Generatornabe 5 und der Rotornabe 6 angeordnet sein.

Mittels Anschlägen zur Begrenzung des Blatteinstellwinkels θ lässt sich eine weitere Optimierung erreichen. Vorzugsweise bleibt der Blatteinstellwinkel θ bei gleichmäßiger Anströmung konstant. In ungünstigen Fällen kann es jedoch zu Schwingungen oder kleinen Veränderungen des Blatteinstellwinkels θ kommen. Um den Blatteinstellwinkel θ in einer Lage stabil zu halten ist es möglich, Anschläge hierfür vorzusehen. Der Blatteinstellwinkel θ kann z.B. auf einen Wert begrenzt werden, der vorzugsweise am Wirkungsgradoptimum liegt. Der Blatteinstellwinkel θ kann durch einen Anschlag daran gehindert werden, kleiner zu werden, auch wenn das durch die Auftriebskraft Fₐ erzeugte Drehmoment kleiner ist als das Generatordrehmoment. Kleine Veränderungen im Auftrieb oder beim Drehmoment der Rotornabe lösen nun nicht unmittelbar eine sofortige Verstellung des Blatteinstellwinkels θ aus. Erst größere Veränderungen durch eine Böe oder ähnliche Windverhältnisse haben ein Verstellen des Blatteinstellwinkels θ zur Folge. Die Windkraftanlage läuft stabiler und Schwingungen werden vermieden.

In gleicher Weise kann der Blatteinstellwinkel θ auch in der sogenannten Fahnenstellung begrenzt werden, in der das Rotorblatt 1 vollständig aus dem Wind, also parallel zu diesem, verdreht ist. Dies ermöglicht es, auch bei Sturm die Windkraftanlage stabil laufen zu lassen, ohne dass Gefahr besteht, dass die Rotorblätter 1 anfangen zu schwingen oder zu schlagen und so unerwünschte Vibrationen verursacht werden.

Alternativ zu der Koppelvorrichtung, wie sie in den Figuren 2, 3 und 4 gezeigt ist, kann die Koppelvorrichtung auch ein Seil umfassen, welches einerseits am Hebel 12, am Rotorblatt 1 und andererseits an der Generatornabe 5 befestigt ist. Vorzugsweise lenkt hierbei eine Umlenkrolle das Seil derart um, dass die Kraft tangential auf die Generatornabe 5 einwirkt.

Eine weitere Ausführungsmöglichkeit für die Koppelvorrichtung besteht darin, dass ein Verbindungselement über einen Zapfen an der Generatornabe 5 befestigt ist. Die Verbindung zur Rotornabe 6 erfolgt mittels eines Zapfens, welcher in der Rotornabe 6 in einer Nut 10 läuft. Der genaue Verlauf der Nut definiert die Hebelwirkung.

Ein weiteres Ausführungsbeispiel der Koppelvorrichtung umfasst ein Verbindungselement, das als Hebel ausgeführt ist und welches radial zur Rotorblattachse B am Rotorblatt 1 befestigt ist. Der Hebel wirkt direkt auf die Generatornabe. Vorzugsweise sind hier Führungsschlitze je Hebel vorgesehen, in denen die Hebel bewegbar sind.

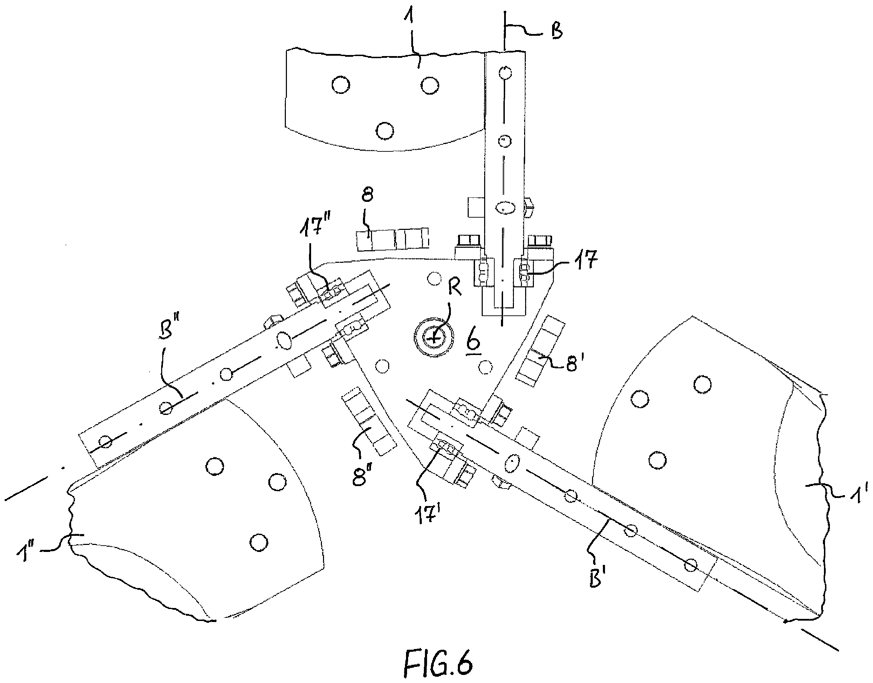

Figur 6 zeigt einen Querschnitt durch die Windkraftanlage im Bereich der Rotornabe 6 entlang der Schnittlinie V-V gemäß Figur 5. Die Figuren 4 und 5 werden im folgenden zusammen beschrieben. Der Generator 3 umfasst in bekannter Weise einen feststehenden Strator und einen rotierenden Rotor. Mit dem Rotor ist die Generatornabe 5 drehfest verbunden. An der Generatornabe 5 ist ferner ein Wellenzapfen 13 drehfest über eine Schraubverbindung 14 befestigt, wobei der Wellenzapfen 13 koaxial zur Rotorachse R ausgerichtet ist. Auf dem Wellenzapfen 13 ist die Rotornabe 6 über Wälzlager 15, 16 drehbar gelagert. Selbstverständlich können hier auch andere Lagerungsarten vorgesehen sein. Wesentlich ist nur, dass sich die Rotornabe 6 relativ zur Generatornabe 5 verdrehen lässt. An der Generatornabe 5 sind erste Koppelelemente 8, 8' drehfest verbunden. Wie bereits oben erläutert, weisen diese Nuten 10 auf, die sich entlang der Rotorachse R kurvenförmig erstrecken.

An der Rotornabe 6 sind die drei Rotorblätter 1, 1', 1" drehbar gelagert. Exemplarisch wird das erste der Rotorblätter 1 beschrieben. Das Rotorblatt 1 ist über eine Wälzlagerung 17 an der Rotornabe 6 drehbar gelagert. Das Rotorblatt 1 ist hierbei um die Rotorblattachse B drehbar, wobei die Rotorachse B quer und exzentrisch zur Rotorachse R verläuft. An dem Rotorblatt 1 ist der Hebel 12 mit dem Mitnehmer 11 drehfest befestigt. In den in Figuren 4 und 5 dargestellten Ausführungsformen der Koppelvorrichtung sind die ersten Koppelelemente 8, welche die Nuten 10 aufweisen, in sich jeweils eben ausgebildet. Dies führt jedoch dazu, dass die Mitnehmer beim Verdrehen nicht immer senkrecht in die Nuten 10 eintauchen.

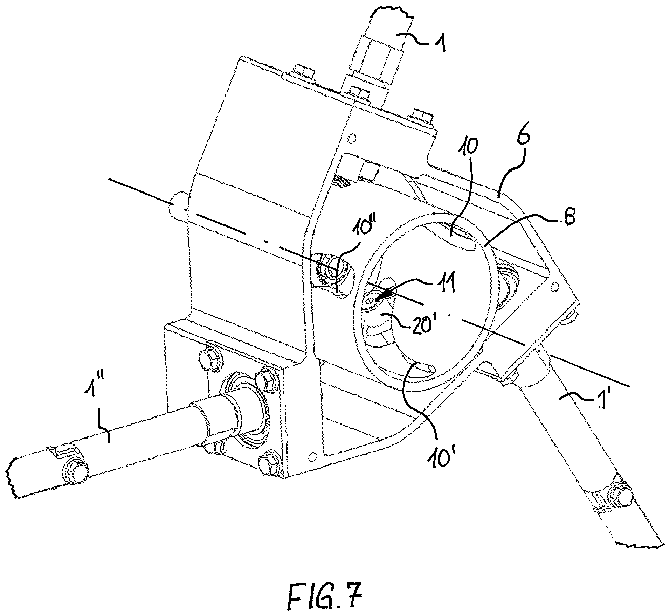

Um dies zu gewährleisten, kann eine Ausführungsform gemäß Figur 7 vorgesehen sein. Bauteile, die mit Bauteilen der ersten Ausführungsform übereinstimmen, sind mit denselben Bezugszeichen versehen. Die Rotornabe 6 ist insgesamt rohrförmig gestaltet, wobei die Nuten 10 in die Wand des Rohres eingebracht sind. Die Hebel 12 der einzelnen Rotorblätter 1 sind hierbei derart angeordnet und gestaltet, dass beim Verdrehen der Rotorblätter 1 die Mitnehmer grundsätzlich senkrecht in die jeweilige Nut 10 eintauchen. Ferner ist hier erkennbar, dass die Mitnehmer 11 nicht lediglich als Stift gestaltet sind, sondern Rollen 20 umfassen, die gegenüber dem Hebel 12 drehbar sind, so dass der Mitnehmer 11 nicht in der Nut 10 gleitet, sondern in dieser abrollt. Hierdurch werden systeminhärente Reibungskräfte, die das Regelverhalten der Einstellung des Blatteinstellwinkels θ beeinflussen können, vermieden.

### Bezugszeichenliste

- 1: Rotorblatt
- 2: Turm
- 3: Generator
- 4: Rotor
- 5: Generatornabe
- 6: Rotornabe
- 7: Koppelvorrichtung
- 8: erstes Koppelelement
- 9: zweites Koppelelement
- 10: Nut
- 11: Mitnehmer
- 12: Hebel
- 13: Wellenzapfen
- 14: Schraubverbindung
- 15: Wälzlager
- 16: Wälzlager
- 17: Wälzlagerung
- 18: Ausgleichsgewicht
- 19: Ausgleichsgewicht
- 20: Rolle

- B: Rotorblattachse
- Fₐ: Auftriebskraft
- F_{f}: Fliehkraft
- F_{ges}: Gesamtluftkraft
- F_{S}: Schubkraft
- F_{V}: Vortriebskraft
- F_{w}: Widerstandskraft
- P: Profilsehne
- R: Rotorachse
- S: Schwerpunkt
- T: Turmachse
- U: Drehrichtung
- Vₐ: Windgeschwindigkeit
- Vᵣₑₛ: resultierende Anströmgeschwindigkeit
- Vᵤ: Umfangsgeschwindigkeit
- α: aerodynamischer Anstellwinkel
- θ: Blatteinstellwinkel

## Patentansprüche

1. Strömungskraftanlage, insbesondere Windkraftanlage, umfassend:
einen Rotor (4) mit einer Rotornabe (6), die um eine Rotorachse (R) drehbar gelagert ist, und mit zumindest einem Rotorblatt (1), das an der Rotornabe (6) um eine Rotorblattachse (B) verstellbar gelagert ist,
eine Generatornabe (5), die um die Rotorachse (R) drehbar gelagert und mit einem elektrischen Generator (3) antriebsverbunden ist, wobei die Rotornabe (6) und die Generatornabe (5) relativ zueinander drehbar sind,
eine Koppelvorrichtung (7), die das Rotorblatt (1) mit der Generatornabe (5) derart koppelt, dass eine Drehbewegung des Rotorblatts (1) um die Rotorblattachse (B) eine Drehbewegung der Rotornabe (6) relativ zur Generatornabe (5) bewirkt, wobei die Koppelvorrichtung (7) im Betrieb ein Verstellen des Rotorblatts (1) durch ein Zusammenwirken eines auf das Rotorblatt (1) einwirkenden Auftriebsmoments, das durch eine auf das Rotorblatt (1) einwirkende Strömung, insbesondere Wind, um die Rotorblattachse (B) erzeugt wird, und eines Generatormoments, das von dem Generator (3) auf die Generatornabe (5) wirkt, bewirkt,
**dadurch gekennzeichnet,**
**dass** das Rotorblatt (1) mindestens ein exzentrisch zur Rotorblattachse (B) angeordnetes Ausgleichsgewicht (18, 19) aufweist, welches ein durch Fliehkräfte erzeugtes Ausgleichsdrehmoment um die Rotorblattachse (B) auf das Rotorblatt (1) erzeugt, wobei das Ausgleichsdrehmoment einem Drehmoment um die Rotorblattachse (B) entgegenwirkt, welches durch Fliehkräfte, die aufgrund der Rotation des Rotorblatts (1) um die Rotorachse (R) auf das Rotorblatt (1) einwirken, erzeugt wird.

2. Strömungskraftanlage nach Anspruch 1,
**dadurch gekennzeichnet,**
**dass** das mindestens eine Ausgleichsgewicht (18, 19) in einem rotorachsnahen Bereich des Rotorblatts (1) angeordnet ist.

3. Strömungskraftanlage nach einem der vorangehenden Ansprüche,
**dadurch gekennzeichnet,**
**dass** zwei Ausgleichsgewichte (18, 19) vorgesehen sind, wobei vorzugsweise das Rotorblatt (1) und die beiden Ausgleichsgewichte (18, 19) gleichmäßig um die Rotorblattachse (B) verteilt angeordnet sind.

4. Strömungskraftanlage nach einem der vorangehenden Ansprüche,
**dadurch gekennzeichnet,**
**dass** die Gewichtsverteilung in radialer Richtung relativ zur Rotorblattachse (B) des mindestens einen Ausgleichsgewichts (18, 19) der Gewichtsverteilung in radialer Richtung relativ zur Rotorblattachse (B) des Rotorblatts (1) entspricht.

5. Strömungskraftanlage nach einem der vorangehenden Ansprüche,
**dadurch gekennzeichnet,**
**dass** die Koppelvorrichtung (7) im Betrieb ein Verstellen des Rotorblatts (1) derart bewirkt, dass sich unabhängig von der Geschwindigkeit der Strömung, insbesondere einer Windgeschwindigkeit, ein Drehmomentengleichgewicht zwischen dem Auftriebsmoment und dem Generatormoment einstellt.

6. Strömungskraftanlage nach einem der vorangehenden Ansprüche,
**dadurch gekennzeichnet,**
**dass** die Koppelvorrichtung (7) ein Kurvengetriebe umfasst.

7. Strömungskraftanlage nach einem der vorangehenden Ansprüche,
**dadurch gekennzeichnet,**
**dass** die Koppelvorrichtung (7) ein mit der Generatornabe (5) verbundenes erstes Koppelelement (8) und ein mit dem Rotorblatt (1) verbundenes zweites Koppelelement (9) umfasst.

8. Strömungskraftanlage nach Anspruch 7,
**dadurch gekennzeichnet,**
**dass** eines der Koppelelemente eine kurvenförmige Kulisse und das andere der Koppelelement einen entlang der Kulisse geführten Mitnehmer umfassen.

9. Strömungskraftanlage nach einem der vorangehenden Ansprüche,
**dadurch gekennzeichnet,**
**dass** dasjenige Koppelelement der beiden Koppelelemente (8, 9), welches die Kulisse umfasst, derart quer zur Erstreckung der Kulisse gekrümmt ist, dass die Kulisse an der Stelle, an der sich der Mitnehmer (11) entlang der Kulisse befindet, denselben Abstand zur Rotorachse (R) aufweist wie der Mitnehmer (11).

10. Strömungskraftanlage nach einem der vorangehenden Ansprüche,
**dadurch gekennzeichnet,**
**dass** die Rotorblattachse (B) die Rotorachse (R) mit Abstand kreuzt.

11. Strömungskraftanlage nach einem der vorangehenden Ansprüche,
**dadurch gekennzeichnet,**
**dass** das Rotorblatt (1) derart angeordnet ist, dass innerhalb des Verstellbereichs des Rotorblatts (1) in einer bestimmten Winkelstellung der Schwerpunkt des Rotorblatts (1) auf einer Längsebene angeordnet ist, die die Rotorachse (R) beinhaltet und die parallel zur jeweiligen Rotorblattachse (B) angeordnet ist.

12. Strömungskraftanlage nach einem der vorangehenden Ansprüche,
**dadurch gekennzeichnet,**
**dass** das Rotorblatt (1) derart angeordnet ist, dass innerhalb des Verstellbereichs des Rotorblatts (1) in einer bestimmten Winkelstellung der Schwerpunkt des Rotorblatts (1) auf einer Radialebene zur Rotorachse (R) angeordnet ist, die die Rotorachse (R) beinhaltet oder diese schneidet.

13. Strömungskraftanlage nach Anspruch 6 und 7,
**dadurch gekennzeichnet,**
**dass** das Rotorblatt (1) derart angeordnet ist, dass beim Verstellen des Rotorblatts (1) von einer Ausgangsstellung, in der das Rotorblatt (1) maximal aus der Strömung, insbesondere aus dem Wind, gedreht ist, in eine Endstellung, in der das Rotorblatt (1) maximal in die Strömung, insbesondere in den Wind, gedreht ist, der Schwerpunkt des Rotorblatts (1) zunächst die Längsebene und anschließend die Radialebene durchläuft.

14. Strömungskraftanlage nach einem der Ansprüche 6 bis 8,
**dadurch gekennzeichnet,**
**dass** das Rotorblatt derart angeordnet ist, dass der Schwerpunkt des Rotorblatts in einer Hauptbetriebsstellung des Rotorblatts auf einer der Ebenen, nämlich Längsebene oder Radialebene, liegt.

15. Strömungskraftanlage nach einem der vorangehenden Ansprüche,
**dadurch gekennzeichnet,**
**dass** die Rotorblattachse (B) relativ zur Rotorachse (R) und das Rotorblatt (1) relativ zur Rotorblattachse (B) derart angeordnet sind, dass bei einer Erhöhung der Drehzahl des Rotors (4) eine Fliehkraft auf das Rotorblatt (1) derart einwirkt, dass sich ein Drehmoment um die Rotorblattachse (B) ergibt, welches das Rotorblatt (1) in die Strömung, insbesondere in den Wind, dreht.

## Claims

1. A fluid flow power plant, in particular wind power plant, comprising:
a rotor (4) having a rotor hub (6), which can rotate about a rotor axis (R), and having at least one rotor blade (1), which is mounted on the rotor hub (6) such that it can be displaced about a rotor blade axis (B),
a generator hub (5), which is mounted so that it can be rotated about the rotor axis (R) and has a drive connection to an electric generator (3), wherein the rotor hub (6) and the generator hub (5) can be rotated relative to each other, a coupling device (7) that couples the rotor blade (1) to the generator hub (5) in such a way that a rotary movement of the rotor blade (1) about the rotor blade axis (B) effects a rotary movement of the rotor hub (6) relative to the generator hub (5), wherein during operation, the coupling device (7) effects a displacement of the rotor blade (1) as a result of interaction of a lifting torque, which is generated by a fluid flow, in particular wind, acting on the rotor blade (1) about the rotor blade axis (B), and of a generator torque which acts by means of the generator (3) on the generator hub (5),
**characterized in that**
the rotor blade (1) has at least one compensating weight (18, 19), arranged eccentrically with respect to the rotor blade axis (B), which generates a compensating torque, generated by centrifugal forces, about the rotor blade axis (B) on the rotor blade (1), wherein the compensating torque counteracts a torque about the rotor blade axis (B) which is generated by centrifugal forces which act on the rotor blade (1) due to the rotation of the rotor blade (1) about the rotor axis (R).

2. The fluid flow power plant according to claim 1,
**characterized in that**
the at least one compensating weight (18, 19) is arranged in a region of the rotor blade (1) close to the rotor axis.

3. The fluid flow power plant according to any one of the preceding claims,
**characterized in that**
two compensating weights (18, 19) are provided, the rotor blade (1) and the two compensating weights (18, 19) preferably being arranged evenly distributed around the rotor blade axis (B).

4. The fluid flow power plant according to any one of the preceding claims,
**characterized in that**
the weight distribution in the radial direction relative to the rotor blade axis (B) of the at least one compensating weight (18, 19) corresponds to the weight distribution in the radial direction relative to the rotor blade axis (B) of the rotor blade (1).

5. The fluid flow power plant according to any one of the preceding claims,
**characterized in that**
during operation the coupling device (7) displaces the position of the rotor blade (1) in such a way that, regardless of the speed of the fluid flow, in particular a wind speed, a torque equilibrium is obtained between the lifting torque and the generator torque.

6. The fluid flow power plant according to any one of the preceding claims,
**characterized in that**
the coupling device (7) comprises a cam gear.

7. The fluid flow power plant according to any one of the preceding claims,
**characterized in that**
the coupling device (7) comprises a first coupling element (8) connected to the generator hub (5) and a second coupling element (9) connected to the rotor blade (1).

8. The fluid flow power plant according to claim 7,
**characterized in that**
one of the coupling elements comprises a curvilinear slot and the other coupling element comprises a carrier which is guided along the slot.

9. The fluid flow power plant according to any one of the preceding claims,
**characterized in that**
the particular coupling element of the two coupling elements (8, 9) which comprises the slot is curved transversely to the extension of the slot, in such a way that the slot, at the point along the slot at which the carrier (11) is located, is the same distance from the rotor axis (R) as the carrier (11).

10. The fluid flow power plant according to any one of the preceding claims,
**characterized in that**
the rotor blade axis (B) crosses the rotor axis (R) with clearance.

11. The fluid flow power plant according to any one of the preceding claims,
**characterized in that**
the rotor blade (1) is arranged in such a way that, within the displacement range of the rotor blade (1) at a specific angular position, the centre of gravity of the rotor blade (1) is arranged on a longitudinal plane which contains the rotor axis (R) and is arranged parallel to the respective rotor blade axis (B).

12. The fluid flow power plant according to any one of the preceding claims,
**characterized in that**
the rotor blade (1) is arranged in such a way that, within the displacement range of the rotor blade (1) at a specific angular position, the centre of gravity of the rotor blade (1) is arranged on a radial plane relative to the rotor axis (R), which contains or intersects the rotor axis (R).

13. The fluid flow power plant according to claim 6 and 7,
**characterized in that**
the rotor blade (1) is positioned in such a way that, during displacement of the rotor blade (1) from an initial position in which the rotor blade (1) is turned maximally away from the flow, in particular from the wind, into a final position in which the rotor blade (1) is turned maximally into the flow, in particular into the wind, the centre of gravity of the rotor blade (1) passes firstly through the longitudinal plane and then the radial plane.

14. The fluid flow power plant according to any one of claims 6 to 8,
**characterized in that**
the blade is arranged in such a way that, in a main operating position of the rotor blade the centre of gravity of the rotor blade lies on one of the planes, namely longitudinal plane or radial plane.

15. The fluid flow power plant according to any one of the preceding claims,
**characterized in that**
the rotor blade axis (B) and the rotor blade (1) are arranged relative to the rotor axis (R) and to the rotor blade axis (B) respectively, in such a way that increasing the speed of the rotor (4) causes a centrifugal force to act on the rotor blade (1), in such a way that a torque is produced about the rotor blade axis (B), which turns the rotor blade (1) into the flow, in particular into the wind.

## Revendications

1. Installation basée sur la mécanique des fluides, en particulier une éolienne comprenant
un rotor (4) avec un moyeu de rotor (6), qui est logé pouvant tourner autour d'un axe de rotation (R) et avec au moins une pale de rotor (1) qui est montée pouvant être réglée sur le moyeu de rotor (6) autour d'un axe de pale de rotor (B),
un moyeu de générateur (5), qui est monté pouvant tourner autour de l'axe de rotor (R) et est relié en entraînement avec un générateur électrique (3), le moyeu de rotor (6) et le moyeu de générateur (5) pouvant tourner l'un par rapport à l'autre,
un dispositif de couplage (7), qui accouple la pale de rotor (1) au moyeu de générateur (5) de telle manière qu'un mouvement de rotation de la pale de rotor (1) cause autour de l'axe de pale de rotor (B) un mouvement de rotation du moyeu de rotor (6) par rapport au moyeu de générateur (5), le dispositif de couplage (7) en fonctionnement causant un réglage de la pale de rotor (1) par une action conjointe d'un couple de sustension agissant sur la pale de rotor (1), qui est produit par un écoulement, notamment du vent, agissant sur la pale de rotor (1) autour de l'axe de pale de rotor (B) et d'un couple de générateur qui agit par le générateur (3) sur le moyeu de générateur (5),
**caractérisée en ce que**
la pale de rotor (1) comporte un poids d'équilibrage (18, 19) disposé de manière excentrique à l'axe de pale de rotor (B), lequel génère un couple d'équilibrage produit par des forces centrifuges autour de l'axe de pale de rotor (B) sur la pale de rotor (1), le couple d'équilibrage est opposé à un couple de rotation autour de l'axe de pale de rotor (B), lequel est généré par des forces centrifuges agissant sur la base de la rotation de la pale de rotor (1) autour de l'axe de rotor (R) sur la pale de rotor (1).

2. Installation basée sur la mécanique des fluides selon la revendication 1,
**caractérisée en ce**
**qu'**au moins un poids d'équilibrage (18, 19) est disposé dans une zone proche de l'axe de rotor de la pale de rotor (1).

3. Installation basée sur la mécanique des fluides selon l'une quelconque des revendications précédentes,
**caractérisée en ce que**
deux poids d'équilibrage (18, 19) sont prévus, de préférence la pale de rotor (1) et les deux poids d'équilibrage (18, 19) étant disposés répartis uniformément autour de l'axe de pale de rotor (B).

4. Installation basée sur la mécanique des fluides selon l'une quelconque des revendications précédentes,
**caractérisée en ce que**
la répartition de poids dans la direction radiale par rapport à l'axe de pale de rotor (B) d'au moins un poids d'équilibrage (18, 19) correspond à la répartition de poids dans la direction radiale par rapport à l'axe de pale de rotor (B) de la pale de rotor (1).

5. Installation basée sur la mécanique des fluides selon l'une quelconque des revendications précédentes,
**caractérisée en ce que**
le dispositif de couplage (7) en fonctionnement cause un réglage de la pale de rotor (1) de telle manière qu'il s'établit un équilibre de couples entre le couple de sustentation et le couple de générateur, indépendamment de la vitesse du courant d'écoulement, notamment d'une vitesse du vent.

6. Installation basée sur la mécanique des fluides selon l'une quelconque des revendications précédentes,
**caractérisée en ce que**
le dispositif de couplage (7) comprend une commande à cames.

7. Installation basée sur la mécanique des fluides selon l'une quelconque des revendications précédentes,
**caractérisée en ce que**
le dispositif de couplage (7) comprend un premier élément de couplage (8) relié au moyeu de générateur (5) et un deuxième élément de couplage (9) relié à la pale de rotor (1).

8. Installation basée sur la mécanique des fluides selon la revendication 7,
**caractérisée en ce**
**qu'**un des éléments de couplage comprend une coulisse en forme de came et l'autre élément de couplage comprend un entraîneur guidé le long de la coulisse.

9. Installation basée sur la mécanique des fluides selon l'une quelconque des revendications précédentes,
**caractérisée en ce que**
l'élément de couplage des deux éléments de couplage (8, 9), qui comprend la coulisse, est arqué transversalement à l'extension de la coulisse de telle manière que la coulisse comporte à l'endroit auquel se trouve l'entraîneur (11) le long de la coulisse, la même distance par rapport à l'axe de rotor (R) que l'entraîneur (11).

10. Installation basée sur la mécanique des fluides selon l'une quelconque des revendications précédentes,
**caractérisée en ce que**
l'axe de pale de rotor (B) croise à distance l'axe de rotor (R).

11. Installation basée sur la mécanique des fluides selon l'une quelconque des revendications précédentes,
**caractérisée en ce que**
la pale de rotor (1) est disposée de telle manière qu'à l'intérieur de la plage de réglage de la pale de rotor (1) dans une certaine position angulaire, le centre de gravité de la pale de rotor (1) est disposé sur un plan longitudinal qui contient l'axe de rotor (R) et est disposé parallèlement à l'axe de pale de rotor respectif (B).

12. Installation basée sur la mécanique des fluides selon l'une quelconque des revendications précédentes,
**caractérisée en ce que**
la pale de rotor (1) est disposé de telle manière qu'à l'intérieur de la plage de réglage de la pale de rotor (1), le centre de gravité de la pale de rotor (1) est disposé sur un plan radial dans une certaine position angulaire par rapport à l'axe de rotor (R) qui contient l'axe de rotor (R) ou coupe celui-ci.

13. Installation basée sur la mécanique des fluides selon les revendications 6 et 7,
**caractérisée en ce que**
la pale de rotor (1) est disposée de telle manière que lors du réglage de la pale de rotor (1) d'une position initiale dans laquelle la pale de rotor (1) est tournée au maximum du courant d'écoulement, notamment du vent, dans une position finale, dans laquelle la pale de rotor (1) est tournée au maximum dans le courant d'écoulement, notamment dans le vent, le centre de gravité de la pale de rotor (1) passe d'abord par le plan longitudinal et ensuite par le plan radial.

14. Installation basée sur la mécanique des fluides selon l'une quelconque des revendications 6 à 8,
**caractérisée en ce que**
la pale de rotor est disposée de telle manière que le centre de gravité de la pale de rotor se trouve, dans une position de fonctionnement principale de la pale de rotor, sur un des plans, notamment un plan longitudinal ou plan radial.

15. Installation basée sur la mécanique des fluides selon l'une quelconque des revendications précédentes,
**caractérisée en ce que**
l'axe de pale de rotor (B) par rapport à l'axe de rotor (R) et la pale de rotor (1) par rapport à l'axe de pale de rotor (B) sont disposés de telle manière que lors de l'augmentation de la vitesse de rotation du rotor (4), une force centrifuge agit sur la pale de rotor (1) de telle manière qu'il se forme un couple autour de l'axe de pale de rotor (B), laquelle fait tourner la pale de rotor (1) dans le courant d'écoulement, notamment dans le vent.
